# EUROPEAN PATENT SPECIFICATION

(11) **EP 2 238 842 B1**
(45) Date of publication and mention of the grant of the patent: **18.03.2015**
(21) Application number: 10168850.5
(22) Date of filing: 09.09.2005
(51) Int. Cl.: A23L 1/29, A23L 1/305

(54) **Nutritional Products Having Improved Quality and Methods and Systems Regarding Same**
NAHRUNGSMITTELN, DIE EINE VERBESSERTE QUALITÄT AUFWEISEN, UND RELEVANTE METHODEN UND SYSTEMEN
PRODUITS DIETETIQUES AYANT UNE QUALITE AMELIOREE, METHODES ET SYSTEMES LES CONCERNANT

(30) Priority: 09.09.2004 US 608635 P
(43) Date of publication of application: 13.10.2010
(62) Divisional of application: 05795459.6
(73) Proprietor: Nestec S.A., 1800 Vevey (CH)
(72) Inventor: Kratky, Zdenek, NEW MILFORD, CT 06776 (US); Haschke, Ferdinand, 1814, La Tour-de-Peilz (CH); German, John Bruce, 1072, FOREL (LAVAUX) (CH); Steven, Matthew, David, Cavite (PH); Buetler, Timo, 8051 Zürich (CH); Bauer, Werner, 1095, LUTRY (CH)
(74) Representative: Künzi, Sophie

(56) References cited:
- WO-A1-2006/077259
- WO-A2-03/059778
- US-A- 4 414 238
- US-A- 4 544 559
- US-A- 4 921 877
- US-A1- 2002 127 005
- US-B1- 6 436 464

## Description

### BACKGROUND

The present invention generally relates to improved nutritional products. More specifically, in an embodiment, the present invention relates to improved infant formulas and methods and systems regarding same.

There are a wide variety of nutritional products that are manufactured. The purpose of these products, in part, is to provide necessary nutrition to the consumer. In addition to providing nutrition to the consumer, it is important that these products are safe for consumption. Thus, for at least certain products, issues of sterility and shelf-life must be considered during the manufacturing process.

An example of a nutritional product is infant formula. For almost a century, an aim of the infant formula industry has been to develop products that at least approximate the composition of human breast milk. The most recent example of this "composition focused" innovation was the introduction of products that were enriched with long-chain polyunsaturated fatty acids, DHA and ARA, unstable ingredients that were blended into the formulation during manufacturing. Infant formula manufacturers at the same time must reconcile several opposing constraints of modem food formulation with varying infant nutrient requirements. Such opposing demands have led at times to compromises in the opportunities to provide certain qualities of human milk to the formulas delivered to infants.

These demands include issues of sterility and shelf-life. Of course, food manufacturing practices must achieve final products with assured microbial safety, e.g., sterility. Traditionally, this means products must be heat processed to reduce any potential microbial contamination to meet or exceed the levels of sterility prescribed for such products in national and international legislation. In addition, products typically must be stored for extended periods of time and hence unstable components cannot be included without deterioration or must be over-dosed to ensure that minimal quantities remain at point of consumption. It is, of course, desirable that products contain all of the essential nutrients needed for human infant growth and development. This results in compositions that are designed for the average requirements in spite of varying needs by infants of different ages, sizes or physiological states.

These formula demands and industrial production constraints have limited the opportunities to approach the highly personal, biologically active, compositionally dynamic and interactive experience of nourishment achieved by human breast feeding. To date, the inventors believe that no truly integrated infant formula production system has been developed that can simultaneously optimize the manufacturing process to minimize the effects of processing on the biological and nutritional quality of infant formula and yet provide the flexibility to deliver customized formulations to individual infants.

A prerequisite to an infant formula is that the final product must be microbiologically safe, and for that reason traditional processing mandates that the final product be adequately heat processed. Thus, products in powder form are typically heat treated before spray-drying. Although such powders have very low bacterial counts, they are not sterile in the sense that this word is used in medicine. Products in liquid form, however, are subject to a more rigorous treatment typically by exposure to high temperatures for short time (UHT - aseptic process) or by retorting. The retort sterilization is in fact recommended for products used in hospitals to feed premature and term newborn babies. Such products are still not completely sterile as bacterial spores may not be completely destroyed by the heat treatment.

While these thermal treatments are successful in assuring microbial safety, they can adversely affect the molecular components and structures that are ingredients in infant formulas. Invariably, heat-treating complex infant formula mixtures leads to various reactions of individual molecules and to interactions between different components. The current strategy to resolve the losses caused by these destructive reactions with respect to the final quantities of components of formula is to include a sufficient excess of the ingredients as a quantitative function of the instability to ensure that sufficient levels of essential nutrients remain in the final product. The strategy of using excess nutrients prior to processing the formula, ignores the potential implications to the infant of consuming thermal reaction products formed during processing. Thus, although necessary, the thermal processing of nutritional components can generate compounds or intermediates that may have undesirable nutritional consequences.

Thermal processing can generate advanced glycation endproducts (AGEs). Through the Maillard reaction, certain amino acids such as lysine can react with aldehyde groups of glucose to create first Schiff bases and then rearrange to Amadori products. These reactions produce various glycoxidation and lipoxidation products which are collectively known as AGEs. For example, AGEs are formed by the Maillard reaction during food processing when mixtures containing protein and carbohydrates are heated. However, AGEs may also be formed endogenously in the body and probably contribute to the natural aging process.

As the term indicates, AGEs are end-products that in general retain little chemical reactivity. They are formed via complex chemical reactions which may include oxidation reactions and formation of reactive intermediates. Thus, AGEs can be considered markers for the formation of these reactive intermediates. These intermediates include glyoxal, methylglyoxal, 3-deoxyglucosone, glyceraldehyde, and others. Examples of AGEs are lactuloselysine, hydroxymethylfurfural, oxalic acid monolysinylamide, and carboxymethyllysine

Recently, it has been suggested that AGEs may be linked to chronic low level inflammation. This is due in part to oxidative stress caused by the AGEs. Chronic low level inflammation has been linked to a number of diseases. For example, it is hypothesized that chronic low level inflammation may be linked to diabetes, cardiovascular disease, Alzheimer, cancer, and even weight gain and aging. A reduction in AGEs in the diet may lead to: extension of life span, prevention/reduction of weight gain; prevention of insulin resistance; prevention of heart disease; and improvement of oxidative stress. Many scientific papers have been written postulating links between AGEs and various disease states. One example is a paper entitled "Advanced Glycation Endproducts" by Wauthier and Guillasseau, Diabetes Metab (Paris) 2001, 27, 535 - 542.

Therefore, there is a need to provide improved nutritional products having reduced levels of AGEs.
Nutritional products with low levels of Maillard reaction products are disclosed in eg., US 4 921 877 and US 6 436 464.
Individual capsules for dispensing beverages are disclosed in e.g., WO 03/059778.

### SUMMARY

The present invention is defined by the claims and provides improved formulations, processes, assembly, and delivery of nutritional products. In an embodiment, the present invention provides nutritional products that have a reduced amount of AGEs or are substantially free of AGEs. Although, in a preferred embodiment, the present invention relates to infant formulas, the present invention has application to a wide variety of other nutritional products.

In another embodiment, the present invention provides a nutritional composition produced in a process requiring a heating step. For example, the composition comprises a reduced amount of undesirable reaction products formed from chemical reactions between proteins and carbohydrates and/or lipids and carbohydrates during exposure to heat.

In an embodiment, the undesirable reaction products are selected from the group consisting of AGEs, intermediates of AGEs and combinations thereof.

In an embodiment, the composition is substantially free of AGEs and intermediates of AGEs.

In an embodiment, the reaction products are quantified by measuring the percentage of blocked lysine of the nutritional composition.

In an embodiment, the percentage of blocked lysine of the nutritional composition is used as a marker for the level of AGEs and intermediates of AGEs formed in the nutritional composition.

The composition is a powder.

In an embodiment, the composition is an infant formula.

In an embodiment, the composition is a dairy product.

The composition includes one or more components selected from the group consisting of a protein source, a carbohydrate source, a lipid source and combinations thereof.

In an embodiment, the composition includes at least one heat labile component.

In an embodiment, the composition is sterilized. For example, the composition can be sterilized by a process selected from the group consisting of bacterial filtration, high pressure sterilization, irradiation, retorting, aseptic processing, heat treatment, pasteurization and combinations thereof.

In another embodiment, the present invention provides a method of producing a nutritional composition. For example, the method comprises providing a protein component, providing a carbohydrate component, treating at least one of the protein component and the carbohydrate component separately from the other component. The components can be treated, for example, to at least reduce bacterial loads therein. The protein component and carbohydrate component are combined after treatment to form the nutritional composition. The method can also comprise separately treating the protein component and the carbohydrate component.

In an embodiment, the nutritional composition comprises a reduced amount of compounds from the group consisting of AGEs, intermediates of AGEs and combinations thereof.

In an embodiment, the carbohydrate component or phase is substantially free of proteins or has a reduced level of proteins. For example, any protein associated with the carbohydrate component may be removed or reduced by any suitable process.

In an embodiment, the protein component or phase is substantially free of carbohydrates or has a reduced level of carbohydrates. For example, any carbohydrate associated with the protein component may be removed or reduced by any suitable process.

In an embodiment, sterilizing the carbohydrate component and sterilizing the protein component can be done by a process selected from the group consisting of bacterial filtration, high pressure sterilization, irradiation, retorting, aseptic processing, thermal treatment and combinations thereof.

In another embodiment, the present invention provides a method of producing a commercially sterile nutritional composition. For example, the method comprises providing a composition having a protein component and a carbohydrate component; and treating the composition. The treated composition can have a reduced amount of undesirable compounds selected from the group consisting of AGEs, intermediates of AGEs and combinations thereof.

In an embodiment, the composition includes at least one heat labile component.

In an embodiment, treating is by a process selected from the group consisting of microfiltration, high pressure sterilization, irradiation and combinations thereof.

In an alternative embodiment, the present invention provides a method of producing a commercially sterile powdered nutritional composition including a source of proteins, a source of lipids and a source of carbohydrates. For example, the method comprises dissolving the source of proteins in water, adding the lipid source, homogenizing the protein/lipid mixture, heat treating the mixture to reduce bacterial loads, concentrating the heat treated mixture, adding the carbohydrate source and spray-drying the mixture.

At least part of the remainder of the carbohydrate source is added to the spray dried powder in an additional dry-mixing step.

In an alternative embodiment, the present invention provides a method of producing a commercially sterile powdered nutritional composition including a source of proteins, a source of lipids and a source of carbohydrates by spray drying. For example, the method comprises dissolving the source of proteins in water together with the minimum amount of carbohydrate necessary to facilitate the spray drying, adding the lipid source, homogenizing the protein/lipid mixture, heat treating the mixture to reduce bacterial loads, concentrating the heat treated mixture, spray-drying the mixture and adding the remainder of the carbohydrate source.

In an embodiment, at least part of the remainder of the carbohydrate source is added during the spray drying step by blowing into the spray dryer.

It is an advantage of the present invention to provide new methods of producing nutritional products.

Another advantage of the present invention is to provide improved infant formulas.

Moreover, an advantage of the present invention is to provide improved methods for producing infant formulas.

Still another advantage of the present invention is to reduce or substantially eliminate in nutritional products unwanted products generated during manufacturing processes.

Furthermore, an advantage of the present invention is to reduce or substantially eliminate AGEs in nutritional products.

Moreover, an advantage of the present invention is to reduce or substantially eliminate AGEs in infant formulas.

Still an advantage of the present invention is to provide nutritional products that reduce oxidative stress as compared to prior art nutritional products.

Another advantage of the present invention is that it provides nutritional formulations that reduce the potential for causing chronic low level inflammation.

And an advantage of the present invention is that it reduces or eliminates the need to use excess components such as vitamins during the manufacturing process.

Additional features and advantages of the present invention are described in, and will be apparent from, the following Detailed Description.

### DETAILED DESCRIPTION

The present invention is defined by the claims and provides improved nutritional products and methods and systems regarding same. In an embodiment, the nutritional products and methods and systems regarding same will have a reduced amount of AGEs or be substantially free of AGEs. In the present specification, the term "reduced AGEs" or "reduced amount of AGEs" should be understood to mean a nutritional composition having a lower level of AGEs than would be found in the same nutritional composition produced by conventional processing, for example, such as heat treatment. In the present specification, the phrase "substantially free of AGEs" should be understood to mean that the AGEs are present at a level that is sufficiently low as to not produce chronic low-level inflammation. This level is at least lower than a corresponding commercially-available product currently available.

In an embodiment, the reduction of AGEs in nutritional compositions of the present invention can be quantified by measuring the percentage of blocked lysine. As will be appreciated from the foregoing, numerous AGEs and their reactive precursors exist. Various tests for AGEs have been proposed in the literature but it will be appreciated that it is impractical to test for every possible compound that might be present. However, a universal feature of nutritional compositions containing proteins and carbohydrates that have undergone a heat treatment is a reduction in the amount of available lysine in the heat treated composition. Thus, measurement of blocked lysine is an indicator not only of the specific reaction of reducing sugars with free lysine groups but also a marker for the presence of other AGEs and the temporary presence of earlier reactive intermediates. For example, the percentage of blocked lysine in products which are commercially available varies between 3 and 17% depending upon the composition of the product with products containing lactose at the higher end of this scale and lactose free products at the lower end of the scale.

It should be appreciated that the measurement of AGEs and intermediates thereof can also be determined by any currently available analytical techniques or methods known to one skilled in the art. For example, one such alternative method is the quantification of carboxymethyllysine which is described in "Advanced glycoxidation end products in commonly consumed foods" by Goldberg et al, J. Am Diet Assoc 2004, 104(8) 1287 - 91.

In another embodiment, the individual macro-components of, for example, the infant formula or shelf stable dairy products, are processed separately and with a minimum amount of treatment required to ensure product safety. The potential for formation of AGEs is thereby greatly reduced. Thus, the present invention allows for the production of compositions which have a reduced level of AGEs or are substantially free of AGEs

In addition, the methods of the present invention provide other benefits such as reducing or eliminating the need to use excess microcomponents to ensure that sufficient microcomponents survive the heat treatment to be effective. Sensitive microcomponents such as those which cannot survive the current heat treatment can also now be included. The present invention also allows for the possibility of customization of formulas. If individual components are processed separately, they can be supplied separately allowing a hospital to make up oral or enteral feeds to suit individual patients.

In an embodiment, the nutritional composition contains lactose and has a level of blocked lysine of less than 8%, more preferably less than 5%. An example of such a composition is an infant formula. Alternatively, the nutritional composition may contain maltodextrin and have a level of blocked lysine of less than 3%, more preferably less than 2%. An example of such a composition is an enteral formula.

Typically, infant formula must be pre-processed to achieve the final composition and to uniformly disperse and solubilize all formula ingredients (proteins, carbohydrates, lipids and other nutrients) and to produce a homogenous emulsion. The emulsion is further processed by high pressure homogenizations and heating to assure homogeneity and reduce bacterial load. If a powdered product is desired, the emulsion is spray-dried and filled into appropriate packaging. If a ready-to-feed liquid is desired, the emulsion is filled into appropriate packaging and subjected to a further heat treatment. The heat treatment may be applied either before filling in which case filling is carried out under aseptic conditions or the filled containers may themselves be heat treated in a so-called retort process. In addition, a small proportion of infant formulas are produced and packaged for the first feeding in hospitals. Virtually all hospital-targeted products are produced in ready-to feed liquid form in small bottles called nursettes. Most of the hospital products are sterilized in these containers by retort processing.

The majority of destructive reactions and of undesirable Maillard complexation reactions that lead to various decomposition and polymerization products including AGEs occur when proteins, lipids and carbohydrates are heated in a liquid phase. This intensive heating is also a factor that leads to the decomposition of various heat labile nutrients. Once they begin during the heating process, many chemical reactions continue, although at slower reaction rates, throughout the storage of either liquid or dry products at room temperature. It should also be noted that under factory conditions it may occasionally be necessary for batches of liquid product to be kept in holding tanks at various stages in the manufacturing process for reasons such as unplanned work on necessary processing equipment. Any delays occurring in this way will increase the potential for AGE formation.

The present invention provides a comprehensive integrated system for producing infant formulas and similar products capable of delivering to the consumer, enteral compositions in powder or liquid form. Pursuant to an embodiment of the present invention, a production and delivery process is provided in which the interaction of enteral composition ingredients and consequent formation of undesirable reaction products are eliminated or minimized.

By way of example and not limitation, examples of enteral compositions of the present invention include: products for feeding infants, also known as starter and follow on infant formula; infant formula specialties and products for feeding premature and low weight infants; enteral compositions for feeding infants and children in need of special nutrients and requiring specialized nutrition (e.g. compositions based on amino acids and peptides, essentially free of intact proteins free of proteins); and enteral compositions for feeding patients and/or treating specific disease states.

In an embodiment, methods of the present invention include methods of producing enteral composition (formula) containing heat labile components such as vitamins, hormones, growth factors and beneficial bacteria, which can be added at concentrations and quantities desired for their optimal nutritional or physiological effects. The methods of the present invention, for example, produce a number of distinct benefits to the final product including: permitting the inclusion of labile components not currently used in infant formula; avoiding the use of excessive components necessary to compensate for the destruction or decomposition of such heat labile components; avoiding hydrolysis, rearrangement, isomerization, complexation, condensation and polymerization reactions and their products; customizing final product formulations according to varying requirements of consumers; detailing of individual portion containers; and extended shelf stability of infant and enteral ingredients.

The nutritional composition is provided as a dry formulation, in which the final form is a powder.

The nutritional composition will include proteins, carbohydrates, and lipids. The proteins that can be used include, but are not limited to, milk or vegetable proteins or fractions of milk proteins such as whey proteins and caseins or fraction of those such as but not limited to alpha-lactalbumin, betalactoglobulin, lactoferrin and their hydrolyzed forms. The carbohydrates can include, by way of example and not limitation, lactose, glucose, sucrose, maltodextrins, galactooligosaccharides, glucooligosaccharides, fractooligosaccharides or other oligosaccharides known to provide explicit physiological benefits or to be present in human and other mammalian milks.

The lipids include, but are not limited to, those of animal, plant or microbial origin and have been converted to a powdered or dry dispersible form by use of an inert carrier, including carbohydrates such as maltodextrin or lactose, or proteins from the group described above. The conversion of lipid, which typically is in the liquid form to a powder form, is a technologically feasible process and such products are commercially available. A wide range of free flowing fat powders is available from Prince International of The Netherlands under the trade mark O2P. Encapsulated docosahexaenoic acid is available from Firmenich under the trade mark DURALIFE where the encapsulation material is a matrix of a food-based carbohydrate. Other spray dried fats are commercialized by Nutri Pharmaceuticals Research Inc. of Las Vegas

A large number of nutritional products also include micronutrients. The micronutrients that can be included in the products and methods of the present invention include, but are not limited to, minerals, vitamins, hormones, growth factors, nucleotides, polynucleotides, and biopolymers mixtures of proteins, carbohydrates and/or nucleotides. If desired, living organisms including, but not limited to, beneficial bacteria known as probiotics and their products, beneficial viruses termed bacteriophages, and their products and yeasts, molds and fungi can be used in the nutritional formulations.

It is important that all components of the formula in an embodiment of the present invention are commercially sterile. In the present specification, the term "commercially sterile" should be understood to mean that the product in question complies with the respective microbiological standard prescribed for products of that type in national and international legislation. For example, the formula components in embodiments of the present invention can be rendered commercially sterile by techniques which are explicitly designed to reduce or eliminate interactions and heat reactions of proteins and lipids, proteins and carbohydrates and/or to reduce damage to or decomposition of heat labile macro- and micronutrients such as nucleotides, vitamins, probiotics, long chain polyunsaturated fatty acids etc. A variety of suitable techniques are available. Some of these techniques rely on the application of heat, for example, such as retorting and aseptic processing. Other non-heat techniques include, for example, bacterial filtration or microfiltration, high pressure sterilization and irradiation. These techniques may be selected and combined as appropriate in the production of specific formulas according to the intended use of the formulas of the present invention.

Proteins that, at the initial phase of their production, are in powder form can be dissolved in water and heat treated to render them commercially sterile. Proteins in the liquid form (milk, whey, protein hydrolyzates, casein) can be treated by heat at conditions, which eliminate or minimize interactions with carbohydrates. In an embodiment, it is particularly preferred to use protein sources free or nearly free of carbohydrates, such as high protein concentrates and protein isolates. An example is the whey protein isolate supplied under the trade mark Bipro by Davisco Foods which contains 95% protein. Such high protein concentrates can be sterilized using relatively high heat conditions, while protein concentrates containing appreciable quantities of carbohydrates, typically exceeding 5% (w/w) can be heat treated by pasteurization.

Alternatively, microbial filtration, UV and gamma irradiations can be used to render protein solutions containing carbohydrates commercially sterile. Commercially sterile solutions and suspensions of proteins may be dried if desired. Suitable drying techniques include, but are not limited to, spray drying and freeze-drying. Similarly, vitamins and other micronutrients can be produced in powder forms, commercially sterile, using currently available technologies.

The present invention provides individual capsules that can be used to produce ready-to-drink formula in a hospital, home, car, or portable devices. Predetermined quantities of formula ingredients in powdered form and essentially free of undesirable products typically described as advanced glycation endproducts, Maillard reaction products and decomposition products of vitamins degradation are produced and filled into capsules. At the time of use a capsule is opened and the contents are mixed with an appropriate quantity of sterile water to produce a single serving of ready to drink infant formula. Generally, the dispensing system may be similar to those used by food service operations to produce ready-to-drink liquids such as coffee or milk-based beverages. The system allows accurate preparation of desired volumes of the formula, virtually eliminating risks of errors in reconstitution of formula from powder, which is common in current practice.

By way of comparison and not limitation, comparing the present invention to the prior art methods, the differences include absence of products formed by decomposition of heat labile components such as vitamins, absence of new chemical forms of minerals salts formed during heat processing, absence of compounds generally described as early or late Maillard reaction products and/or absence of chemical individuals generally described as precursors to formation or formed advanced glycation end products (AGEs). Visually, the products according to an embodiment of the present invention are whiter and more milk-like looking than the prior art method made products.

Once the formulas are prepared, they are stored in unit dose capsules. An intermediate mixing step to produce a "stock" solution of the product can be included or eliminated and the formula components dispensed into the final container which can vary in volume from few milliliters to several liters.

EXAMPLES

The following examples are illustrative of various aspects of the present invention and further illustrate experimental testing conducted in accordance with embodiments of the present invention.

EXAMPLE 1: Production of Infant Formula - Powder

30 kg of casein and a required quantity of calcium and potassium hydroxides to convert the casein into soluble form are dissolved in 1000 liters of demineralized water. To this mixture, 65 kg of whey protein isolate, 116 kg of maltodextrin and 270 kg of fat composed of coconut oil, low erucic acid rapeseed oil, corn oil, fish oil and vegetable oils from Mortierella alpina and emulsifiers (typically lecithins and monoglycerides) is added with intense agitation. The resulting mixture is homogenized, heated to 90°C and spray-dried. Resulting powder is well mixed with 464 kg of edible crystalline lactose, 20 kg of mixture of minerals containing sodium, potassium, calcium magnesium, manganese, iron, zinc and selenium, in form of chlorides, phosphates, citrates, sulphates or other forms known to those skilled in the art of infant nutrition. Finally, a mixture of vitamins in forms of micronutrient premix and containing all those required by regulations is added, in quantities not exceeding the declared label values, other than by GMP.

The resulting powder should have an appreciably lower content of Maillard reaction products and other nutritionally undesirable products, including those formed from heat decomposition of vitamins than a formula with the same composition produced by conventional processing, and is ready for reconstitution in water and consumption.

EXAMPLE 2: Production of Infant Formula - Powder

58 kg of whey protein isolate is dry mixed with 100 kg of non-fat dry milk solids. Both protein sources are of edible quality and of low microbial counts. To this mixture, 550 kg of spray-dried fat composition containing 270 kg of fat (coconut oil, low erucic acid rapeseed oil, corn oil, fish oil and vegetable oils from Mortierella alpina and emulsifiers) and 280 kg of maltodextrin carrier is added. This mixture is homogenized and heat treated as described in Example 1 and then spray dried. 160 kg of edible lactose, is blown into the spray dryer and a further 100 kg is dry mixed with the mixtures of mineral and micronutrients in powder form to fulfill regulatory, nutritional and label requirements are added.

The resulting powder should have an appreciably lower content of Maillard reaction products and other nutritionally undesirable products, including those formed from heat decomposition of vitamins than a formula with the same composition produced by conventional processing, and is ready for reconstitution in water and consumption.

## Claims

1. An individual capsule suitable for producing ready-to-drink formula comprising a predetermined quantity of commercially sterile formula ingredients in powdered form **characterized in that** said formula ingredients are essentially free of undesirable products typically described as Advanced Glycation Endproducts (AGEs) or Maillard reaction products and wherein said formula ingredients comprise a source of proteins, a source of lipids and a source of carbohydrates and wherein said formula ingredients are obtainable by a method comprising dissolving the source of proteins in water, adding the lipid source, homogenizing the protein/lipid mixture, heat treating the mixture to reduce bacterial loads, concentrating the heat treated mixture, adding part of the carbohydrate source and spray-drying the mixture, wherein at least part of the remainder of the carbohydrate source is added to the spray dried powder in an additional dry-mixing step, said formula being further **characterized in that** it comprises lactose and has a level of blocked lysine of less than 8%.

2. An individual capsule suitable for producing ready-to-drink formula comprising a predetermined quantity of commercially sterile formula ingredients in powdered form **characterized in that** said formula ingredients have reduced amount of compounds selected from the group consisting of AGEs, intermediates of AGEs and combination thereof and wherein said formula ingredients comprise a source of proteins, a source of lipids and a source of carbohydrates and wherein said formula ingredients are obtainable by a method comprising dissolving the source of proteins in water, adding the lipid source, homogenizing the protein/lipid mixture, heat treating the mixture to reduce bacterial loads, concentrating the heat treated mixture, adding part of the carbohydrate source and spray-drying the mixture, wherein at least part of the remainder of the carbohydrate source is added to the spray dried powder in an additional dry-mixing step, said formula being further **characterized in that** it comprises lactose and has a level of blocked lysine of less than 8%.

3. An individual capsule suitable for producing ready-to-drink formula comprising a predetermined quantity of commercially sterile formula ingredients in powdered form **characterized in that** said formula ingredients are essentially free of undesirable products typically described as Advanced Glycation Endproducts (AGEs) or Maillard reaction products and wherein said formula ingredients comprise a source of proteins, a source of lipids and a source of carbohydrates and wherein said formula ingredients are obtainable by a method comprising spray-drying and comprising dissolving the source of proteins in water together with the minimum amount of carbohydrate necessary to facilitate the spray drying, adding the lipid source, homogenizing the protein/lipid mixture, heat treating the mixture to reduce bacterial loads, concentrating the heat treated mixture, spray-drying the mixture and adding the remainder of the carbohydrate source, wherein at least part of the remainder of the carbohydrate source is added during the spray drying step by blowing into the spray dryer, said formula being further **characterized in that** it comprises lactose and has a level of blocked lysine of less than 8%.

4. An individual capsule suitable for producing ready-to-drink formula comprising a predetermined quantity of commercially sterile formula ingredients in powdered form **characterized in that** said formula ingredients have reduced amount of compounds selected from the group consisting of AGEs, intermediates of AGEs and combination thereof and wherein said formula ingredients comprise a source of proteins, a source of lipids and a source of carbohydrates and wherein said formula ingredients are obtainable by a method comprising spray-drying and comprising dissolving the source of proteins in water together with the minimum amount of carbohydrate necessary to facilitate the spray drying, adding the lipid source, homogenizing the protein/lipid mixture, heat treating the mixture to reduce bacterial loads, concentrating the heat treated mixture, spray-drying the mixture and adding the remainder of the carbohydrate source, wherein at least part of the remainder of the carbohydrate source is added during the spray drying step by blowing into the spray dryer, , said formula being further **characterized in that** it comprises lactose and has a level of blocked lysine of less than 8%.

5. The individual capsule of any one of claims 1 to 4, wherein said ready-to-drink formula is an infant formula.

6. The individual capsule of any of the preceding claims wherein all the formula ingredients are commercially sterile and are produced by a method comprising bacterial filtration or microfiltration.

7. A method of producing a ready-to-drink formula, said method comprising:
(a) producing formula ingredients comprising a source of proteins, a source of lipids and a source of carbohydrates by a method comprising dissolving the source of proteins in water, adding the lipid source, homogenizing the protein/lipid mixture, heat treating the mixture to reduce bacterial loads, concentrating the heat treated mixture, adding part of the carbohydrate source and spray-drying the mixture, wherein at least part of the remainder of the carbohydrate source is added to the spray dried powder in an additional dry-mixing step,
(b) filling said formula ingredients in an individual capsule,
(c) mixing the contents of said capsule with an appropriate quantity of sterile water.

8. A method of producing a ready-to-drink formula, said method comprising:
(a) producing formula ingredients by spray-drying comprising a source of proteins, a source of lipids and a source of carbohydrates, said method comprising dissolving the source of proteins in water together with the minimum amount of carbohydrate necessary to facilitate the spray drying, adding the lipid source, homogenizing the protein/lipid mixture, heat treating the mixture to reduce bacterial loads, concentrating the heat treated mixture, spray-drying the mixture and adding the remainder of the carbohydrate source, wherein at least part of the remainder of the carbohydrate source is added during the spray drying step by blowing into the spray dryer.
(b) filling said formula ingredients in an individual capsule,
(c) mixing the contents of said capsule with an appropriate quantity of sterile water.

9. The method of claim 7 or 8 comprising water sterilization.

10. The method of any of claims 7 to 9 comprising water temperature control.

11. The method of any of claims 7 to 10 comprising bacterial filtration or microfiltration.

## Patentansprüche

1. Zur Herstellung einer trinkfertigen Milchnahrung geeignete Einzelkapsel mit einer vorgegebenen Menge an technisch sterilen Nahrungszutaten in Pulverform, **dadurch gekennzeichnet, dass** die Milchnahrungszutaten im Wesentlichen frei von unerwünschten Produkten sind, die normalerweise als Advanced Glycation Endprodukte (AGEs) oder Maillard-Reaktionsprodukte bezeichnet werden, und wobei die Nahrungszutaten eine Eiweißquelle, eine Lipidquelle sowie eine Kohlenhydratquelle umfassen, und wobei die Nahrungszutaten durch ein Verfahren erhältlich sind, welches Auflösen der Eiweißquelle in Wasser, Zusetzen der Lipidquelle, Homogenisieren der Eiweiß-/Lipidmischung, Wärmebehandlung der Mischung zur Verringerung bakterieller Belastungen, Konzentrieren der wärmebehandelten Mischung, Zusetzen eines Teils der Kohlenhydratquelle und Sprühtrocknen der Mischung umfasst, wobei zumindest ein Teil der restlichen Kohlenhydratquelle dem sprühgetrockneten Pulver in einem zusätzlichen Trockenmischschritt zugesetzt wird, wobei die Milchnahrung weiterhin **dadurch gekennzeichnet ist, dass** sie Laktose enthält und einen Gehalt von blockiertem Lysin von weniger als 8% aufweist.

2. Zur Herstellung einer trinkfertigen Milchnahrung geeignete Einzelkapsel mit einer vorgegebenen Menge an technisch sterilen Nahrungszutaten in Pulverform, **dadurch gekennzeichnet, dass** die Nahrungszutaten eine verringerte Menge an Verbindungen ausgewählt aus der Gruppe bestehend aus AGEs, Zwischenprodukten von AGEs sowie eine Kombination aus diesen aufweisen, und wobei die Nahrungszutaten eine Eiweißquelle, eine Lipidquelle sowie eine Kohlenhydratquelle umfassen und wobei die Nahrungszutaten durch ein Verfahren erhältlich sind, welches Auflösen der Eiweißquelle in Wasser, Zusetzen der Lipidquelle, Homogenisieren der Eiweiß-/Lipidmischung, Wärmebehandlung der Mischung zur Verringerung bakterieller Belastungen, Konzentrieren der wärmebehandelten Mischung, Zusetzen eines Teils der Kohlenhydratquelle und Sprühtrocknen der Mischung umfasst, wobei zumindest ein Teil der restlichen Kohlenhydratquelle dem sprühgetrockneten Pulver in einem zusätzlichen Trockenmischschritt zugesetzt wird, wobei die Milchnahrung weiterhin **dadurch gekennzeichnet ist, dass** sie Laktose enthält und einen Gehalt von blockiertem Lysin von weniger als 8% aufweist.

3. Zur Herstellung einer trinkfertigen Milchnahrung geeignete Einzelkapsel mit einer vorgegebenen Menge an technisch sterilen Nahrungszutaten in Pulverform, **dadurch gekennzeichnet, dass** die Nahrungszutaten im Wesentlichen frei von unerwünschten Produkten sind, die normalerweise als Advanced Glycation Endprodukte (AGEs) oder Maillard-Reaktionsprodukte bezeichnet werden, und wobei die Nahrungszutaten eine Eiweißquelle, eine Lipidquelle sowie eine Kohlenhydratquelle umfassen, und wobei die Nahrungszutaten durch ein Verfahren erhältlich sind, welches Sprühtrocknen umfasst und Auflösen der Eiweißquelle in Wasser zusammen mit der geringsten, zur Vereinfachung des Sprühtrocknens erforderlichen Menge an Kohlenhydrat, Zusetzen der Lipidquelle, Homogenisieren der Eiweiß-/Lipidmischung, Wärmebehandlung der Mischung zur Verringerung bakterieller Belastungen, Konzentrieren der wärmebehandelten Mischung, Sprühtrocken der Mischung sowie Zusetzen der restlichen Kohlenhydratquelle umfasst, wobei zumindest ein Teil der restlichen Kohlenhydratquelle während des Sprühtrocknungsschrittes durch Einblasen in den Sprühtrockner zugesetzt wird, wobei die Milchnahrung weiterhin **dadurch gekennzeichnet ist, dass** sie Laktose enthält und einen Gehalt an blockiertem Lysin von weniger als 8% aufweist.

4. Zur Herstellung einer trinkfertigen Milchnahrung geeignete Einzelkapsel mit einer vorgegebenen Menge an technisch sterilen Nahrungszutaten in Pulverform, **dadurch gekennzeichnet, dass** die Nahrungszutaten eine verringerte Menge an Verbindungen ausgewählt aus der Gruppe bestehend aus AGEs, Zwischenprodukten von AGEs sowie eine Kombination aus diesen aufweist, und wobei die Nahrungszutaten eine Eiweißquelle, eine Lipidquelle sowie eine Kohlenhydratquelle umfassen und wobei die Nahrungszutaten durch ein Verfahren erhältlich sind, welches Sprühtrocknen umfasst und Auflösen der Eiweißquelle in Wasser zusammen mit der geringsten, zur Vereinfachung des Sprühtrocknens erforderlichen Menge an Kohlenhydrat, Zusetzen der Lipidquelle, Homogenisieren der Eiweiß-/Lipidmischung, Wärmebehandlung der Mischung zur Verringerung bakterieller Belastungen, Konzentrieren der wärmebehandelten Mischung, Sprühtrocknen der Mischung sowie Zusetzen der restlichen Kohlenhydratquelle umfasst, wobei zumindest ein Teil der restlichen Kohlenhydratquelle während des Sprühtrocknungsschrittes durch Einblasen in den Sprühtrockner zugesetzt wird, wobei die Milchnahrung weiterhin **dadurch gekennzeichnet ist, dass** sie Laktose enthält und einen Gehalt an blockiertem Lysin von weniger als 8% aufweist.

5. Einzelkapsel gemäß einem der Ansprüche 1 bis 4, wobei die trinkfertige Milchnahrung eine Babynahrung ist.

6. Einzelkapsel gemäß einem der vorhergehenden Ansprüche, wobei alle Nahrungszutaten technisch steril sind und durch ein Verfahren hergestellt werden, welches Bakterienfiltration oder Mikrofiltration umfasst.

7. Verfahren zur Herstellung einer trinkfertigen Milchnahrung mit den Schritten:
(a) Herstellen von Nahrungszutaten, die eine Eiweißquelle, eine Lipidquelle und eine Kohlenhydratquelle umfassen, durch ein Verfahren, das aufweist: Auflösen der Eiweißquelle in Wasser, Zusetzen der Lipidquelle, Homogenisieren der Eiweiß-/Lipidmischung, Wärmebehandeln der Mischung zur Verringerung bakterieller Belastungen, Konzentrieren der wärmebehandelten Mischung, Zusetzen eines Teils der Kohlenhydratquelle und Sprühtrocknen der Mischung, wobei zumindest ein Teil der restlichen Kohlenhydratquelle dem sprühgetrockneten Pulver in einem zusätzlichen Trockenmischschritt zugesetzt wird,
(b) Einfüllen der Nahrungszutaten in eine Einzelkapsel,
(c) Mischen der Inhaltsstoffe der Kapsel mit einer geeigneten Menge an sterilem Wasser.

8. Verfahren zur Herstellung einer trinkfertigen Milchnahrung, wobei das Verfahren aufweist:
(a) Herstellen von Nahrungszutaten durch Sprühtrocknen mit einer Eiweißquelle, einer Lipidquelle und einer Kohlenhydratquelle, wobei das Verfahren Auflösen der Eiweißquelle in Wasser zusammen mit der geringsten Kohlenhydratmenge, die zur Vereinfachung des Sprühtrocknens erforderlich ist, Zusetzen der Lipidquelle, Homogenisieren der Protein-/Lipidmischung, Wärmebehandeln der Mischung zur Verringerung von bakteriellen Belastungen, Konzentrieren der wärmebehandelten Mischung, Sprühtrocknen der Mischung und Zusetzen der restlichen Kohlenhydratquelle umfasst, wobei zumindest ein Teil der restlichen Kohlenhydratquelle während des Sprühtrocknungsschrittes durch Einblasen in den Sprühtrockner zugesetzt wird,
(b) Einfüllen der Nahrungszutaten in eine Einzelkapsel,
(c) Mischen der Inhalte der Kapsel mit einer geeigneten Menge an sterilem Wasser.

9. Verfahren gemäß Anspruch 7 oder 8, welches eine Wassersterilisierung umfasst.

10. Verfahren gemäß einem der Ansprüche 7 bis 9, welches eine Wassertemperatursteuerung umfasst.

11. Verfahren gemäß einem der Ansprüche 7 bis 10, welches Bakterienfiltration oder Mikrofiltration umfasst.

## Revendications

1. Capsule individuelle appropriée pour produire une composition prête à boire comprenant une quantité prédéterminée d'ingrédients de composition commercialement stériles et sous forme de poudre **caractérisée en ce que** lesdits ingrédients de composition sont essentiellement exempts de produits indésirables typiquement décrits comme des produits finaux de glycation avancée (AGEs) ou produits de réaction de Maillard et dans laquelle lesdits ingrédients de composition comprennent une source de protéines, une source de lipides et une source de glucides et dans laquelle lesdits ingrédients de composition sont susceptibles d'être obtenus par un procédé comprenant la dissolution de la source de protéines dans de l'eau, l'ajout de la source de lipides, l'homogénéisation du mélange protéines/lipides, le traitement thermique du mélange afin de réduire les charges bactériennes, la concentration du mélange traité thermiquement, l'ajout d'une partie de la source de glucides et le séchage par pulvérisation du mélange, dans laquelle au moins une partie du reste de la source de glucides est ajoutée à la poudre séchée par pulvérisation dans une étape additionnelle de mélange à sec, ladite composition étant en outre **caractérisée en ce qu'**elle comprend du lactose et présente un niveau de lysine bloquée de moins de 8%.

2. Capsule individuelle appropriée pour produire une composition prête à boire comprenant une quantité prédéterminée d'ingrédients de composition commercialement stériles et sous forme de poudre **caractérisée en ce que** lesdits ingrédients de composition présentent une quantité réduite de composés choisis parmi le groupe constitué par des AGEs, des produits intermédiaires d'AGEs et combinaison de ceux-ci et dans laquelle lesdits ingrédients de composition comprennent une source de protéines, une source de lipides et une source de glucides et dans laquelle lesdits ingrédients de composition sont susceptibles d'être obtenus par un procédé comprenant la dissolution de la source de protéines dans de l'eau, l'ajout de la source de lipides, l'homogénéisation du mélange protéines/lipides, le traitement thermique du mélange afin de réduire les charges bactériennes, la concentration du mélange traité thermiquement, l'ajout d'une partie de la source de glucides et le séchage par pulvérisation du mélange, dans laquelle au moins une partie du reste de la source de glucides est ajoutée à la poudre séchée par pulvérisation dans une étape additionnelle de mélange à sec, ladite composition étant en outre **caractérisée en ce qu'**elle comprend du lactose et présente un niveau de lysine bloquée de moins de 8%.

3. Capsule individuelle appropriée pour produire une composition prête à boire comprenant une quantité prédéterminée d'ingrédients de composition commercialement stériles et sous forme de poudre **caractérisée en ce que** lesdits ingrédients de composition sont essentiellement exempts de produits indésirables typiquement décrits comme des produits finaux de glycation avancée (AGEs) ou produits de réaction de Maillard et dans laquelle lesdits ingrédients de composition comprennent une source de protéines, une source de lipides et une source de glucides et dans laquelle lesdits ingrédients de composition sont susceptibles d'être obtenus par un procédé comprenant le séchage par pulvérisation et comprenant la dissolution de la source de protéines dans de l'eau avec la quantité minimum de glucides nécessaire pour faciliter le séchage par pulvérisation, l'ajout de la source de lipides, l'homogénéisation du mélange protéines/lipides, le traitement thermique du mélange afin de réduire les charges bactériennes, la concentration du mélange traité thermiquement, le séchage par pulvérisation du mélange et l'ajout du reste de la source de glucides, dans laquelle au moins une partie du reste de la source de glucides est ajoutée au cours de l'étape de séchage par pulvérisation par soufflage dans le séchoir à pulvérisation, ladite composition étant en outre **caractérisée en ce qu'**elle comprend du lactose et présente un niveau de lysine bloquée de moins de 8%.

4. Capsule individuelle appropriée pour produire une composition prête à boire comprenant une quantité prédéterminée d'ingrédients de composition commercialement stériles et sous forme de poudre **caractérisée en ce que** lesdits ingrédients de composition présentent une quantité réduite de composés choisis parmi le groupe constitué par des AGEs, des produits intermédiaires d'AGEs et combinaison de ceux-ci et dans laquelle lesdits ingrédients de composition comprennent une source de protéines, une source de lipides et une source de glucides et dans laquelle lesdits ingrédients de composition sont susceptibles d'être obtenus par un procédé comprenant le séchage par pulvérisation et comprenant la dissolution de la source de protéines dans de l'eau avec la quantité minimum de glucides nécessaire pour faciliter le séchage par pulvérisation, l'ajout de la source de lipides, l'homogénéisation du mélange protéines/lipides, le traitement thermique du mélange afin de réduire les charges bactériennes, la concentration du mélange traité thermiquement, le séchage par pulvérisation du mélange et l'ajout du reste de la source de glucides, dans laquelle au moins une partie du reste de la source de glucides est ajoutée au cours de l'étape de séchage par pulvérisation par soufflage dans le séchoir à pulvérisation, ladite composition étant en outre **caractérisée en ce qu'**elle comprend du lactose et présente un niveau de lysine bloquée de moins de 8%.

5. Capsule individuelle selon l'une quelconque des revendications 1 à 4, dans laquelle ladite composition prête à boire est une composition pour nourrisson.

6. Capsule individuelle selon l'une quelconque des revendications précédentes, dans laquelle tous les ingrédients de composition sont commercialement stériles et sont produits par un procédé comprenant une filtration bactérienne ou une microfiltration.

7. Procédé de production d'une composition prête à boire, ledit procédé comprenant :
(a) la production d'ingrédients de composition comprenant une source de protéines, une source de lipides et une source de glucides par un procédé comprenant la dissolution de la source de protéines dans de l'eau, l'ajout de la source de lipides, l'homogénéisation du mélange protéines/lipides, le traitement thermique du mélange afin de réduire les charges bactériennes, la concentration du mélange traité thermiquement, l'ajout d'une partie de la source de glucides et le séchage par pulvérisation du mélange, au moins une partie du reste de la source de glucides étant ajoutée à la poudre séchée par pulvérisation dans une étape additionnelle de mélange à sec,
(b) le remplissage desdits ingrédients de composition dans une capsule individuelle,
(c) le mélange des contenus de ladite capsule avec une quantité appropriée d'eau stérile.

8. Procédé de production d'une composition prête à boire, ledit procédé comprenant :
(a) la production d'ingrédients de composition par séchage par pulvérisation comprenant une source de protéines, une source de lipides et une source de glucides, ledit procédé comprenant la dissolution de la source de protéines dans de l'eau avec la quantité minimum de glucides nécessaire pour faciliter le séchage par pulvérisation, l'ajout de la source de lipides, l'homogénéisation du mélange protéines/lipides, le traitement thermique du mélange afin de réduire les charges bactériennes, la concentration du mélange traité thermiquement, le séchage par pulvérisation du mélange et l'ajout du reste de la source de glucides, au moins une partie du reste de la source de glucides étant ajoutée au cours de l'étape de séchage par pulvérisation par soufflage dans le séchoir à pulvérisation,
(b) le remplissage desdits ingrédients de composition dans une capsule individuelle,
(c) le mélange des contenus de ladite capsule avec une quantité appropriée d'eau stérile.

9. Procédé selon la revendication 7 ou 8 comprenant une stérilisation de l'eau.

10. Procédé selon l'une quelconque des revendications 7 à 9 comprenant un contrôle de la température de l'eau.

11. Procédé selon l'une quelconque des revendications 7 à 10 comprenant une filtration bactérienne ou une microfiltration.
